# EUROPEAN PATENT APPLICATION

(11) **EP 4 810 557 A1**
(43) Date of publication of application: **23.09.2026**
(21) Application number: 26164992.5
(22) Date of filing: 16.03.2026
(51) Int. Cl.: C08K 5/5313, C08K 5/5317, C08K 5/134, C08K 5/526, C08K 7/14, C08L 77/06

(54) **POLYAMIDE COMPOSITE MATERIAL AND APPLICATION THEREOF**

(30) Priority: 17.03.2025 CN 202510310667
(71) Applicant: KINGFA SCI. & TECH. CO., LTD., Guangzhou, Guangdong 510663 (CN); Liaoning Kingfa Biomaterial Co., Ltd., Panjin City, Liaoning Province 124000 (CN)
(72) Inventor: Jing, Xinke, Guangzhou, Guangdong, 510663 (CN); Chen, Pingxu, Guangzhou, Guangdong, 510663 (CN); Ye, Nanbiao, Guangzhou, Guangdong, 510663 (CN); Li, Jide, Guangzhou, Guangdong, 510663 (CN); Liu, Zhen, Guangzhou, Guangdong, 510663 (CN); Tan, Xiaobin, Guangzhou, Guangdong, 510663 (CN); Tang, Ming, Guangzhou, Guangdong, 510663 (CN)
(74) Representative: Petraz, Gilberto Luigi

(57) **Abstract**

The present invention provides a polyamide composite material and an application thereof. The polyamide composite material includes, in parts by mass, the following components: 35-82 parts of a polyamide resin, 5-45 parts of a reinforcing material, and 5-25 parts of an organic phosphonate flame retardant. A water-soluble acid value of the organic phosphonate flame retardant is 0.1-0.3 mg KOH/g. According to the present invention, by adopting an organic phosphonate flame retardant with a low acid value, occurrence of dialkylphosphinic acid released during decomposition in a high-temperature process can be slowed down, so that the quantity of mold deposits produced by the polyamide composite material in an injection molding process is significantly reduced, thereby improving injection molding production efficiency. Meanwhile, the polyamide composite material has a significantly reduced content of water-boiling precipitates, and excellent heat and humidity resistance stability, which prolongs its service life under hot and humid conditions.

## Description

### TECHNICAL FIELD

The present invention belongs to the technical field of polymer materials, and specifically relates to a polyamide composite material and an application thereof.

### BACKGROUND

Polyamide, also known as nylon, contains repeated amide groups -NHCO- on its molecular main chain. The groups are polar, resulting in the formation of strong hydrogen bonding interactions between molecular chains. Therefore, polyamide has high crystallinity and excellent mechanical properties, and is a type of resin with the largest output, the most varieties, the widest applications, and excellent comprehensive properties among the five general-purpose engineering plastics.

Brominated flame retardants are typically adopted in traditional flame-retardant nylon for flame retardation. However, with the continuous improvement of environmental protection requirements and the issuance of RoHS Directive on the restriction and prohibition of the use of hazardous substances and the EU WEEE Directive on the treatment of waste electrical equipment from the EU, traditional brominated flame retardants can no longer meet the requirements of the EU RoHS and WEEE Directives. The halogen-free conversion of flame-retardant nylon materials conforms to the development trend of green environmental protection and is also a development trend requirement for flame-retardant nylon materials in industries such as electronic and electrical appliances. In the application field of electronic and electrical materials, such as circuit breakers, connectors, and terminal blocks, materials are required to be halogen-free. Moreover, an increasing number of customers not only have requirements on the flame-retardant rating of materials, but also put forward increasingly stringent requirements on the extractability and service life of materials.

As a versatile halogen-free flame retardant, dialkyl phosphinates not only exhibit excellent flame retardant properties, a low addition amount, and a minor impact on the physical and electrical properties of the base resin, but also endow the corresponding flame-retardant material with a lower smoke emission during combustion than halogen-based flame retardants and a high comparative tracking index (CTI). Dialkyl phosphinate flame-retardant polyamides demonstrate superior performance in both mechanical properties and electrical properties, thereby gaining increasing favor from manufacturers in the electrical and electronic industry and boasting broad market prospects for application. However, with the continuous improvement of performance requirements for products in the industry, the performance defects of dialkyl phosphinate flame-retardant polyamides have gradually been exposed. Since polyamide contains a larger number of polar amide groups, it is relatively prone to water absorption and has a relatively high water absorption rate. For example, the water absorption rate of polyamide 66 can reach 2.7% under the conditions of 23°C and 50% humidity, and the addition of dialkyl phosphinate exacerbates the water absorption problem of the material. Furthermore, studies by Braun U et al. have found that when dialkyl phosphinate is used to flame-retard polyamide, dialkyl phosphinate tends to decompose thermally during extrusion or high-temperature injection molding processing, generating acidic dialkyl phosphinic acid substances, which in turn promote the decomposition of the system, resulting in a larger amount of gas emission during processing. Severe mold deposits often occur on the mold during repeated injection molding, which not only affects the appearance of the articles, but also requires frequent mold cleaning, leading to low production efficiency and making it difficult to popularize and apply the products well.

At present, the main method for solving the mold deposit problem in the injection molding of dialkyl phosphinate flame-retardant polyamide materials is to add an acid acceptor to the system to reduce the acidity of the system. For example, in EP2417191A1, calcium oxide is added to the system, which undergoes a neutralization reaction with acidic substances to reduce the acidity of the system, thereby reducing the decomposition of the matrix resin and lowering the corrosion to the mold during high-temperature injection molding. However, calcium oxide is prone to moisture absorption, and its addition will exacerbate the moisture absorption problem of the polyamide system, leading to an increased water absorption rate, which is difficult to control during processing. In CN112409786A, the prepared halogen-free flame-retardant thermoplastic polyamide exhibits low mold deposits by adding a certain amount of ethylene copolymer to the system. In CN114874616A, the prepared halogen-free flame-retardant thermoplastic polyamide achieves more consecutive mold opening and closing cycles (indicating lower mold deposits) by adding a metal oxide and a polyhydroxy system to the system. However, the above methods of improving the acidity of the system and reducing mold deposits by means of adding external auxiliaries not only increase the cost, but also inevitably lead to the degradation of other properties of the flame-retardant polyamide due to the addition of new substances. For example, the compatibility between the external auxiliaries and the matrix resin is poor; the addition of inorganic auxiliaries results in reduced mechanical properties of the material, a high risk of auxiliary precipitation, and insufficient heat and humidity resistance stability of the product, among other issues.

Therefore, the development of a flame-retardant polyamide material that achieves low mold deposits, minimal auxiliary precipitation, and good heat and humidity resistance without the aid of other auxiliaries is a research focus in this field.

### SUMMARY

In view of the deficiencies in the prior art, an objective of the present invention is to provide a polyamide composite material and an application thereof. By adopting an organic phosphonate flame retardant with a low acid value, the polyamide composite material has a significantly reduced quantity of mold deposits, a low content of water-boiling precipitates, and excellent heat and humidity resistance, which prolongs its service life under hot and humid conditions.

To achieve this objective, the present invention adopts the following technical solutions:

In a first aspect, the present invention provides a polyamide composite material, including, in parts by mass, the following components:

| | |
|---|---|
| a polyamide resin | 35-82 parts |
| a reinforcing material | 5-45 parts |
| an organic phosphonate flame retardant | 5-25 parts, |

where a water-soluble acid value of the organic phosphonate flame retardant is 0.1-0.3 mg KOH/g.

According to the present invention, the use of an organic phosphonate flame retardant with a low acid value can slow down occurrence of dialkylphosphinic acid released during decomposition in a high-temperature process, so that the quantity of mold deposits produced by the polyamide composite material in an injection molding process is low without the addition of other acid-accepting or adsorptive auxiliaries, thereby improving injection molding production efficiency and article appearance. Meanwhile, the polyamide composite material has a significantly reduced content of water-boiling precipitates (i.e., low flame retardant precipitation), and good heat and humidity resistance stability, which prolongs its service life under hot and humid conditions.

The following shows preferred technical solutions of the present invention, but is not intended to limit the technical solutions provided by the present invention. Through the following preferred technical solutions, the objectives and beneficial effects of the present invention can be better achieved and realized.

In the polyamide composite material of the present invention, the polyamide resin, in parts by mass, is 35-82 parts, and for example, may be 40 parts, 45 parts, 50 parts, 55 parts, 60 parts, 65 parts, 70 parts, 75 parts, or 80 parts, as well as specific point values among the above point values. For reasons of limited space and for the sake of brevity, the specific point values included in the range are not exhaustively enumerated in the present invention.

The reinforcing material, in parts by mass, is 5-45 parts, and for example, may be 8 parts, 10 parts, 12 parts, 15 parts, 18 parts, 20 parts, 22 parts, 25 parts, 28 parts, 30 parts, 32 parts, 35 parts, 38 parts, 40 parts, 42 parts, or 44 parts, as well as specific point values among the above point values. For reasons of limited space and for the sake of brevity, the specific point values included in the range are not exhaustively enumerated in the present invention.

The organic phosphonate flame retardant, in parts by mass, is 5-25 parts, and for example, may be 6 parts, 8 parts, 10 parts, 12 parts, 15 parts, 18 parts, 20 parts, 22 parts, or 24 parts, as well as specific point values among the above point values. For reasons of limited space and for the sake of brevity, the specific point values included in the range are not exhaustively enumerated in the present invention.

The water-soluble acid value of the organic phosphonate flame retardant is 0.1-0.3 mg KOH/g, and for example, may be 0.11 mg KOH/g, 0.12 mg KOH/g, 0.15 mg KOH/g, 0.18 mg KOH/g, 0.2 mg KOH/g, 0.22 mg KOH/g, 0.25 mg KOH/g, 0.28 mg KOH/g, or 0.29 mg KOH/g, as well as specific point values among the above point values. For reasons of limited space and for the sake of brevity, the specific point values included in the range are not exhaustively enumerated in the present invention.

Exemplarily, the water-soluble acid value of the organic phosphonate flame retardant can be determined via testing by the following method: 1 g of the sample to be tested is uniformly wetted with ethanol (the mass of ethanol is mₑₜₕₐₙₒₗ), then water (the mass of water is m_{water}) is added, and after sealed water boiling at 90°C for 1 h, the mixture is cooled to 25°C and kept at constant temperature for 30 min, then supplemented with an aqueous ethanol solution to the total mass before the water boiling; filtration is performed to obtain a clear filtrate with a mass of m₁, the clear filtrate is subjected to a potentiometric titration test method to determine the test acid value, and the potentiometric titration test method is adopted to determine the blank acid value of (m_{water} + mₑₜₕₐₙₒₗ), where the concentration of the potassium hydroxide solution adopted for titration is 0.05 mol/L, and water-soluble acid value = test acid value × (m_{water} + mₑₜₕₐₙₒₗ)/m₁ - blank acid value.

In the present invention, the polyamide includes any one or a combination of at least two of a condensation product of a dicarboxylic acid and a diamine, a condensation product of an ω-amino acid, and a ring-opening polymerization product of a cyclic lactam. The dicarboxylic acid exemplarily includes, but is not limited to: any one or a combination of at least two of adipic acid, sebacic acid, undecanedioic acid, dodecanedioic acid, terephthalic acid, and isophthalic acid. The diamine exemplarily includes, but is not limited to: any one or a combination of at least two of butanediamine, pentamethylenediamine, hexamethylenediamine, octamethylenediamine, nonamethylenediamine, decamethylenediamine, dodecamethylenediamine, p-phenylenediamine, and m-phenylenediamine. The cyclic lactam exemplarily includes, but is not limited to: any one or a combination of at least two of caprolactam, capryllactam, undecanolactam, and laurolactam. The ω-amino acid exemplarily includes, but is not limited to: any one or a combination of at least two of an ω-amino acid formed by ring-opening of the aforementioned cyclic lactam and aminobenzoic acid.

Preferably, the polyamide resin includes any one or a combination of at least two of polyamide 6 (polycaprolactam), polyamide 11 (polyundecanolactam), polyamide 12 (polylaurolactam), polyamide 66 (polyhexamethylene adipamide), polyamide 46 (polyhexamethylene succinamide), polyamide 610 (polyhexamethylene sebacamide), polyamide 611 (polydecamethylene undecanedioamide), polyamide 612 (polydecamethylene dodecanedioamide), polyamide 1010 (polydecamethylene sebacamide), polyamide 6T (polyhexamethylene terephthalamide), polyamide 9T (polynonamethylene terephthalamide), and polyamide 10T (polydecamethylene terephthalamide).

Preferably, the reinforcing material includes any one or a combination of at least two of a glass fiber, a carbon fiber, an aramid fiber, an asbestos fiber, a wollastonite fiber, a ceramic fiber, a potassium titanate whisker, a basic magnesium sulfate whisker, a silicon carbide whisker, and an aluminum borate whisker, more preferably a glass fiber.

Preferably, the glass fiber includes any one or a combination of at least two of an alkali-free glass fiber (E-glass fiber), a medium-alkali glass fiber (C-glass fiber), a high-alkali glass fiber (A-glass fiber), an alkali-resistant glass fiber (AR-glass fiber), a special glass fiber (S-glass fiber), a low-dielectric glass fiber (D-glass fiber), and a quartz glass fiber.

Preferably, the glass fiber has a diameter of 0.1-30 µm, and for example, may be 0.5 µm, 1 µm, 2 µm, 5 µm, 8 µm, 10 µm, 12 µm, 15 µm, 18 µm, 20 µm, 22 µm, 25 µm, or 28 µm, as well as specific point values among the above point values. For reasons of limited space and for the sake of brevity, the specific point values included in the range are not exhaustively enumerated in the present invention. Further preferably, the diameter is 5-20 µm.

Preferably, the organic phosphonate flame retardant includes, in parts by mass, the following components:

| | |
|---|---|
| a diethylphosphinate | 95-99.88 parts |
| an ethylbutylphosphinate | 0.1-3 parts |
| an ethylphosphonate | 0.01-1 part |
| a monoethylphosphinate | 0.01-1 part. |

The diethylphosphinate in the organic phosphonate flame retardant, in parts by mass, is 95-99.88 parts, and for example, may be 95.5 parts, 96 parts, 96.2 parts, 96.5 parts, 96.8 parts, 96.9 parts, 97 parts, 97.2 parts, 97.5 parts, 97.8 parts, 98 parts, 98.2 parts, 98.5 parts, 98.8 parts, 99 parts, 99.2 parts, 99.5 parts, 99.6 parts, or 99.8 parts, as well as specific point values among the above point values. For reasons of limited space and for the sake of brevity, the specific point values included in the range are not exhaustively enumerated in the present invention.

Preferably, a mass percentage content of the diethylphosphinate in the organic phosphonate flame retardant is ≥ 94%, and for example, may be 94.5%, 95%, 95.5%, 96%, 96.2%, 96.5%, 96.8%, 97%, 97.2%, 97.5%, 97.8%, 98%, 98.2%, 98.5%, 98.8%, 99%, 99.2%, 99.5%, 99.8%, or 99.8%, as well as specific point values among the above point values. For reasons of limited space and for the sake of brevity, the specific point values included in the range are not exhaustively enumerated in the present invention.

The ethylbutylphosphinate in the organic phosphonate flame retardant, in parts by mass, is 0.1-3 parts, and for example, may be 0.12 parts, 0.15 parts, 0.2 parts, 0.25 parts, 0.3 parts, 0.4 parts, 0.5 parts, 0.6 parts, 0.8 parts, 1 part, 1.2 parts, 1.5 parts, 1.8 parts, 2 parts, 2.2 parts, 2.5 parts, 2.7 parts, 2.8 parts, or 2.9 parts, as well as specific point values among the above point values. For reasons of limited space and for the sake of brevity, the specific point values included in the range are not exhaustively enumerated in the present invention.

The ethylphosphonate in the organic phosphonate flame retardant, in parts by mass, is 0.01-1 part, and for example, may be 0.02 parts, 0.05 parts, 0.1 parts, 0.15 parts, 0.2 parts, 0.25 parts, 0.3 parts, 0.35 parts, 0.4 parts, 0.45 parts, 0.5 parts, 0.55 parts, 0.6 parts, 0.65 parts, 0.7 parts, 0.75 parts, 0.8 parts, 0.85 parts, 0.9 parts, or 0.95 parts, as well as specific point values among the above point values. For reasons of limited space and for the sake of brevity, the specific point values included in the range are not exhaustively enumerated in the present invention.

The monoethylphosphinate in the organic phosphonate flame retardant, in parts by mass, is 0.01-1 part, and for example, may be 0.02 parts, 0.05 parts, 0.1 parts, 0.15 parts, 0.2 parts, 0.25 parts, 0.3 parts, 0.35 parts, 0.4 parts, 0.45 parts, 0.5 parts, 0.55 parts, 0.6 parts, 0.65 parts, 0.7 parts, 0.75 parts, 0.8 parts, 0.85 parts, 0.9 parts, or 0.95 parts, as well as specific point values among the above point values. For reasons of limited space and for the sake of brevity, the specific point values included in the range are not exhaustively enumerated in the present invention.

Exemplarily, the parts by mass of diethylphosphinate, ethylbutylphosphinate, ethylphosphonate, and monoethylphosphinate in the organic phosphonate flame retardant may be analyzed and determined via testing by liquid chromatography. For example, the sample to be tested is dissolved in an aqueous sulfuric acid solution (mass concentration 30%) of 5 times the sample mass, and then diluted by 10-30 times with a mobile phase for analysis and testing. A mixture of water and methanol at a mass ratio of 9:1 is adopted for the mobile phase, with trifluoroacetic acid added at a volume content of 0.5%. A ShimNex CS C18 chromatographic column is adopted with a flow rate of 0.6 mL/min. The mass content of each component is calculated by an area normalization method.

Preferably, cations in the diethylphosphinate, the ethylbutylphosphinate, the ethylphosphonate, and the monoethylphosphinate each independently include any one or a combination of at least two of Al³⁺, Ca²⁺, Cu²⁺, Zn²⁺, Fe²⁺, Fe³⁺, and Ti⁴⁺, further preferably Al³⁺.

Preferably, the organic phosphonate flame retardant further includes an alkali-insoluble substance, and the alkali-insoluble substance includes any one or a combination of at least two of a hydroxide, an oxide, a phosphate, a pyrophosphate, a polyphosphate, and a phosphite.

Preferably, the alkali-insoluble substance includes any one or a combination of at least two of aluminum hydroxide, aluminum oxide, aluminum phosphate, aluminum pyrophosphate, aluminum polyphosphate, and aluminum phosphite.

The alkali-insoluble substance in the organic phosphonate flame retardant, in parts by mass, is ≤ 3 parts, and for example, may be 0 parts, 0.01 parts, 0.02 parts, 0.05 parts, 0.08 parts, 0.1 parts, 0.15 parts, 0.2 parts, 0.25 parts, 0.3 parts, 0.4 parts, 0.5 parts, 0.6 parts, 0.8 parts, 1 part, 1.2 parts, 1.5 parts, 1.8 parts, 2 parts, 2.2 parts, 2.5 parts, or 2.8 parts, as well as specific point values among the above point values. For reasons of limited space and for the sake of brevity, the specific point values included in the range are not exhaustively enumerated in the present invention.

Exemplarily, the parts by mass of the alkali-insoluble substance in the organic phosphonate flame retardant are determined via testing by the following method: the sample to be tested is mixed with an aqueous sodium hydroxide solution (mass concentration 3%) at a mass ratio of 1:100, stirred at 35°C for 30 min, filtered with filter paper having a precision of ≤ 2 µm, and rinsed with water 3 times. The filter paper is dried and then weighed, and the mass increase value relative to the filter paper before filtration (dry filter paper) is the mass of the insoluble substance. The ratio of the mass of the insoluble substance to the mass of the sample to be tested is the mass content of the alkali-insoluble substance.

Preferably, the organic phosphonate flame retardant further includes other phosphorus-containing compounds. The other phosphorus-containing compounds in the organic phosphonate flame retardant, in parts by mass, are ≤ 1 parts, and for example, may be 0 parts, 0.01 parts, 0.05 parts, 0.1 parts, 0.2 parts, 0.3 parts, 0.4 parts, 0.5 parts, 0.6 parts, 0.7 parts, 0.8 parts, 0.9 parts, or 0.95 parts, as well as specific point values among the above point values. For reasons of limited space and for the sake of brevity, the specific point values included in the range are not exhaustively enumerated in the present invention. Further preferably, the other phosphorus-containing compounds are 0.05-0.4 parts.

It should be noted that the other phosphorus-containing compounds are alkali-soluble phosphorus-containing substances different from the diethylphosphinate, the ethylbutylphosphinate, the ethylphosphonate, and the monoethylphosphinate. The parts by mass thereof can be determined by phosphorus nuclear magnetic resonance spectroscopy. In the phosphorus nuclear magnetic resonance spectrum, the integrated area of peaks other than those of the diethylphosphinate, the ethylbutylphosphinate, the ethylphosphonate, and the monoethylphosphinate represents the content of the other phosphorus-containing compounds.

Preferably, the organic acid value of the organic phosphonate flame retardant is ≤ 0.05 mg KOH/g, and for example, may be 0.001 mg KOH/g, 0.005 mg KOH/g, 0.008 mg KOH/g, 0.01 mg KOH/g, 0.02 mg KOH/g, 0.025 mg KOH/g, 0.028 mg KOH/g, 0.03 mg KOH/g, 0.032 mg KOH/g, 0.035 mg KOH/g, 0.038 mg KOH/g, 0.04 mg KOH/g, or 0.045 mg KOH/g, as well as specific point values among the above point values. For reasons of limited space and for the sake of brevity, the specific point values included in the range are not exhaustively enumerated in the present invention. Further preferably, the organic acid value is 0.001-0.04 mg KOH/g.

Exemplarily, the organic acid value of the organic phosphonate flame retardant may be determined via testing by the following method: 1 g of the sample to be tested is uniformly wetted with dichloromethane (the mass of dichloromethane is m_{dichloromethane}), and then after sealed boiling at 90°C for 1 h, cooled to 25°C and kept at constant temperature for 30 min, and dichloromethane is supplemented to the total mass before the boiling; filtration is performed to obtain a clear filtrate with a mass of m₁, the clear filtrate is subjected to a potentiometric titration test method to determine the test acid value, and the potentiometric titration test method is adopted to determine the blank acid value of dichloromethane with a mass of m_{dichloromethane}. The concentration of potassium hydroxide solution adopted for titration is 0.05 mol/L, and organic acid value = test acid value × m_{dichloromethane}/m₁ - blank acid value.

Preferably, a mass content of a sulfate radical in the organic phosphonate flame retardant is 100-500 ppm, and for example, may be 120 ppm, 150 ppm, 200 ppm, 250 ppm, 270 ppm, 300 ppm, 350 ppm, 400 ppm, 420 ppm, 450 ppm, or 480 ppm, as well as specific point values among the above point values. For reasons of limited space and for the sake of brevity, the specific point values included in the range are not exhaustively enumerated in the present invention. Further preferably, the mass content is 110-430 ppm.

Exemplarily, the mass content of the sulfate radical in the organic phosphonate flame retardant is determined via testing by an ion chromatography technique with an external standard method with reference to the method in Standard EN 14582:2007-"Determination of Halogen Content."

Preferably, a D₅₀ particle size of the organic phosphonate flame retardant is 1-100 µm, and for example, may be 10 µm, 20 µm, 30 µm, 33 µm, 35 µm, 38 µm, 40 µm, 50 µm, 60 µm, 70 µm, 80 µm, 90 µm, or 95 µm, as well as specific point values among the above point values. For reasons of limited space and for the sake of brevity, the specific point values included in the range are not exhaustively enumerated in the present invention. Further preferably, the particle size is 20-60 µm.

The D₅₀ particle size of the organic phosphonate flame retardant refers to the particle size corresponding to a volume cumulative distribution percentage of 50%, which may be determined via testing using a laser particle size analyzer with reference to Standard GB/T 19077-2016 Particle size distribution - Laser diffraction methods.

Preferably, a moisture content of the organic phosphonate flame retardant is ≤ 1 wt%, and for example, may be 0, 0.01 wt%, 0.02 wt%, 0.05 wt%, 0.08 wt%, 0.1 wt%, 0.15 wt%, 0.2 wt%, 0.25 wt%, 0.3 wt%, 0.4 wt%, 0.5 wt%, 0.6 wt%, 0.7 wt%, 0.8 wt%, or 0.9 wt%, as well as specific point values among the above point values. For reasons of limited space and for the sake of brevity, the specific point values included in the range are not exhaustively enumerated in the present invention. Further preferably, the moisture content is 0.05-0.3 wt%.

Exemplarily, the moisture content of the organic phosphonate flame retardant may be determined via testing by an infrared moisture analyzer. For example, the MA 35 infrared moisture analyzer from Sartorius, Germany is adopted, and the water content is automatically tested after the sample is placed at 120°C for 30 min.

Preferably, a phosphorus content of the organic phosphonate flame retardant is 22-25 wt%, and for example, may be 22.2 wt%, 22.5 wt%, 22.8 wt%, 23 wt%, 23.2 wt%, 23.5 wt%, 23.8 wt%, 24 wt%, 24.2 wt%, 24.5 wt%, or 24.8 wt%, as well as specific point values among the above point values. For reasons of limited space and for the sake of brevity, the specific point values included in the range are not exhaustively enumerated in the present invention.

Exemplarily, the phosphorus content of the organic phosphonate flame retardant may be determined via testing by the following method: the sample to be tested is dissolved in an aqueous sulfuric acid solution (mass concentration 30%), and testing is performed with reference to Standard GB/T 11893-1989 "Water quality - Determination of total phosphorus - Ammonium molybdate spectrophotometric method."

It should be noted that the polymer composition of the present invention may further include any other additives, other auxiliaries, and the like that are motivated to be added in the art.

Preferably, the polyamide composite material further includes, in parts by mass, 1-15 parts of a melamine flame retardant. The melamine flame retardant, in parts by mass, may be 2 parts, 3 parts, 4 parts, 5 parts, 6 parts, 7 parts, 8 parts, 9 parts, 10 parts, 11 parts, 12 parts, 13 parts, or 14 parts, as well as specific point values among the above point values. For reasons of limited space and for the sake of brevity, the specific point values included in the range are not exhaustively enumerated in the present invention.

Preferably, the melamine flame retardant includes any one or a combination of at least two of melamine polyphosphate, melamine pyrophosphate, piperazine pyrophosphate, melam polyphosphate, melam pyrophosphate, melam phosphate, melam diethylphosphinate, melam ethylphosphinate, melam phosphite, and melam alkylphosphonate.

Preferably, a mass ratio of the organic phosphonate flame retardant to the melamine flame retardant is 1:(0.1-3), and for example, may be 1:0.2, 1:0.5, 1:0.8, 1:1, 1:1.2, 1:1.5, 1:1.8, 1:2, 1:2.2, 1:2.5, 1:2.8, etc., further preferably 1:(0.2-1).

Preferably, the polyamide composite material further includes any one or a combination of at least two of a synergistic flame retardant, an antioxidant, and a lubricant.

Preferably, the synergistic flame retardant includes any one or a combination of at least two of zinc borate, zinc stannate, zinc sulfide, and boehmite.

Preferably, the synergistic flame retardant in the polyamide composite material, in parts by mass, is ≤ 5 parts. The synergistic flame retardant may be 0 parts, 0.1 parts, 0.2 parts, 0.5 parts, 0.8 parts, 1 part, 1.5 parts, 2 parts, 2.5 parts, 3 parts, 3.5 parts, 4 parts, or 4.5 parts, as well as specific point values among the above point values. For reasons of limited space and for the sake of brevity, the specific point values included in the range are not exhaustively enumerated in the present invention.

Preferably, the polyamide composite material further includes, in parts by mass, 0.01-1 part of the antioxidant. The antioxidant, in parts by mass, may be 0.05 parts, 0.1 parts, 0.2 parts, 0.3 parts, 0.4 parts, 0.5 parts, 0.6 parts, 0.7 parts, 0.8 parts, or 0.9 parts, as well as specific point values among the above point values. For reasons of limited space and for the sake of brevity, the specific point values included in the range are not exhaustively enumerated in the present invention.

Preferably, the antioxidant includes any one or a combination of at least two of a hindered amine antioxidant, a hindered phenol antioxidant, a phosphite antioxidant, and a thioester antioxidant.

Exemplarily, the antioxidant includes any one or a combination of at least two of pentaerythritol tetrakis(β-(3,5-di-tert-butyl-4-hydroxyphenyl)propionate), n-octadecyl β-(3,5-di-tert-butyl-4-hydroxyphenyl)propionate, N,N'-bis-(3-(3,5-di-tert-butyl-4-hydroxyphenyl)propionyl)hexanediamine, tris(2,4-di-tert-butylphenyl) phosphite, 2,6-di-tert-butyl-p-cresol, distearyl β,β-thiodipropionate, 2,4-dioctylthiomethyl-6-tert-butylphenol, 2,6-di-tert-butyl-4-methoxyphenol, tocopherol, 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl) disulfide, 2,2'-methylenebis(6-tert-butyl-4-methylphenol), 3,5,3',5'-tetra-tert-butyl-4,4'-dihydroxydibenzyl ether, dioctadecyl 2,2-bis(3,5-di-tert-butyl-2-hydroxybenzyl)malonate, 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol, 2,4-dioctylthio-6-(3,5-di-tert-butyl-4-hydroxyanilino)-1,3,5-triazine, dimethyl 2,5-di-tert-butyl-4-hydroxybenzylphosphonate, 4-hydroxylauramide, 4-hydroxystearanilide, octyl *N*-(3,5-di-tert-butyl-4-hydroxyphenyl)carbamate, alkyl β-(5-tert-butyl-4-hydroxy-3-methylphenyl)propionate, alkyl β-(3,5-dicyclohexyl-4-hydroxyphenyl)propionate, alkyl 3,5-di-tert-butyl-4-hydroxyphenylacetate, *N,N'*-bis(3,5-di-tert-butyl-4-hydroxyphenylpropionyl)hexamethylenediamine, *N,N'*-bis(3,5-di-tert-butyl-4-hydroxyphenylpropionyl)trimethylenediamine, *N,N*'-bis(3,5-di-tert-butyl-4-hydroxyphenylpropionyl)hydrazine.

Preferably, the polyamide composite material further includes, in parts by mass, 0.01-1 part of the lubricant. The lubricant, in parts by mass, may be 0.05 parts, 0.1 parts, 0.2 parts, 0.3 parts, 0.4 parts, 0.5 parts, 0.6 parts, 0.7 parts, 0.8 parts, or 0.9 parts, as well as specific point values among the above point values. For reasons of limited space and for the sake of brevity, the specific point values included in the range are not exhaustively enumerated in the present invention.

Preferably, the lubricant includes any one or a combination of at least two of an ester lubricant, an alcohol lubricant, a hydrocarbon lubricant, a fatty acid lubricant, a fatty acid amide lubricant, and a metallic soap lubricant.

Preferably, the polyamide composite material further includes any one or a combination of at least two of a filler, a colorant, and an ultraviolet absorber.

Preferably, the filler includes any one or a combination of at least two of silicon dioxide, aluminum silicate, silicon oxide, calcium carbonate, titanium oxide, talc, wollastonite, diatomaceous earth, clay, kaolin, spherical glass, mica, gypsum, iron oxide, magnesium oxide, and zinc oxide.

Preferably, the colorant includes an inorganic colorant and/or an organic colorant; and the colorant may include a pigment and/or a dye according to its solubility and coloring properties.

Exemplarily, the colorant includes any one or a combination of at least two of titanium dioxide, ultramarine blue, iron oxide, zinc sulfide, carbon black, phthalocyanine, quinacridone, perylene black, and aniline black.

Preferably, the ultraviolet absorber includes any one or a combination of at least two of a hydroxybenzoate ultraviolet absorber, a benzophenone ultraviolet absorber, a benzotriazole ultraviolet absorber, a substituted acrylonitrile ultraviolet absorber, a triazine ultraviolet absorber, and a hindered amine ultraviolet absorber.

Exemplarily, the ultraviolet absorber includes any one or a combination of at least two of cetyl 3,5-diisobutyl-4-hydroxybenzoate, 2,4-di-tert-butylphenyl 3,5-di-tert-butyl-4-hydroxybenzoate, n-hexadecyl 3,5-di-tert-butyl-4-hydroxybenzoate, 2-hydroxy-4-alkoxybenzophenone, 1,3-bis(methoxy-3-hydroxy-4-benzophenone)benzene, 2-hydroxy-4-phenylalkoxybenzophenone, 2-hydroxy-4-n-octyloxybenzophenone, 2-hydroxy-4-methacryloyloxybenzophenone, 2-(2'-hydroxy-5'-methylphenyl)benzotriazole, 2-(2'-hydroxy-5'-methyl)-benzotriazole, 2-(3',5'-di-tert-butyl-2'-hydroxy)-benzotriazole, 2-(2'-hydroxy-3'-isobutyl-5'-tert-butyl)-benzotriazole, 2-(2'-hydroxy-3',5'-bis(1,1-dimethylphenyl)-benzotriazole, 2-(2'-hydroxy-5'-tert-octyl)-benzotriazole, 2-(2'-hydroxy-3'-(1,1-dimethylphenyl)-5'-(1,1,3,3-tetramethylbutyl)-benzotriazole, 2,2'-methylene-(6-(2H-benzotriazole)-4-tert-octyl)phenol, 2-(2H-benzotriazol-2-yl)-4,6-bis(1-methyl-1-phenylethyl)phenol, bis-2,2,6,6-tetramethylpiperidinol sebacate, *N,N'*-(2,2,6,6-tetramethyl-4-aminopiperidine)-isophthalamide, bis-1-octyloxy-2,2,6,6-tetramethylpiperidinol sebacate, 1,2,2,6,6-pentamethylpiperidinol methacrylate.

Preferably, the filler in the polyamide composite material, in parts by mass, is ≤ 40 parts, and for example, may be 0 parts, 0.1 parts, 0.5 parts, 1 part, 2 parts, 5 parts, 8 parts, 10 parts, 15 parts, 20 parts, 25 parts, 30 parts, 35 parts, or 38 parts, as well as specific point values among the above point values. For reasons of limited space and for the sake of brevity, the specific point values included in the range are not exhaustively enumerated in the present invention.

In one preferred technical solution, the polyamide composite material includes, in parts by mass, the following components:

| | |
|---|---|
| a polyamide resin | 35-82 parts |
| a reinforcing material | 5-45 parts |
| an organic phosphonate flame retardant | 5-25 parts |
| a melamine flame retardant | 0-15 parts |
| an antioxidant | 0-1 part |
| a lubricant | 0-1 part. |

The polyamide resin is a matrix material. Preferably, a mass percentage content of the polyamide resin in the polyamide composite material is 35%-82%, and for example, may be 40%, 45%, 50%, 55%, 60%, 65%, 70%, 75%, or 80%, as well as specific point values among the above point values. For reasons of limited space and for the sake of brevity, the specific point values included in the range are not exhaustively enumerated in the present invention.

The reinforcing material can adjust the mechanical properties of the polyamide composite material and achieve a reinforcing effect. Preferably, a mass percentage content of the reinforcing material in the polyamide composite material is 5%-45%, and for example, may be 8%, 10%, 12%, 15%, 18%, 20%, 22%, 25%, 28%, 30%, 32%, 35%, 38%, 40%, 42%, or 44%, as well as specific point values among the above point values. For reasons of limited space and for the sake of brevity, the specific point values included in the range are not exhaustively enumerated in the present invention.

Preferably, a mass percentage content of the organic phosphonate flame retardant in the polyamide composite material is 5%-25%, and for example, may be 6%, 8%, 10%, 12%, 15%, 18%, 20%, 22%, 25%, 28%, 30%, 32%, or 34%, as well as specific point values among the above point values. For reasons of limited space and for the sake of brevity, the specific point values included in the range are not exhaustively enumerated in the present invention.

Preferably, a water-boiling phosphorus content of the polyamide composite material is ≤ 510 ppm, and for example, may be 360 ppm, 380 ppm, 400 ppm, 420 ppm, 450 ppm, 480 ppm, 500 ppm, 505 ppm, or 508 ppm, as well as specific point values among the above point values. For reasons of limited space and for the sake of brevity, the specific point values included in the range are not exhaustively enumerated in the present invention. Further preferably, the water-boiling phosphorus content is 370-507 ppm.

Exemplarily, the water-boiling phosphorus content of the polyamide composite material is determined by the following method: the polyamide composite material to be tested is placed in hot water at 90°C and boiled for 1 h, cooled to room temperature, and filtered, and the phosphorus content of the filtrate is determined by the ammonium molybdate spectrophotometric method specified in GB/T 11893-1989.

Preferably, an injection molding mold deposit of the polyamide composite material is ≤ 7.5 mg, and for example, may be 3.5 mg, 3.8 mg, 4 mg, 4.2 mg, 4.5 mg, 4.8 mg, 5 mg, 5.2 mg, 5.5 mg, 5.8 mg, 6 mg, 6.2 mg, 6.5 mg, 6.8 mg, 7 mg, 7.2 mg, or 7.4 mg, as well as specific point values among the above point values. For reasons of limited space and for the sake of brevity, the specific point values included in the range are not exhaustively enumerated in the present invention. Further preferably, the injection molding mold deposit is 4-7.2 mg.

Exemplarily, the injection molding mold deposit of the polyamide composite material is determined by the following method: the polyamide composite material is continuously injection-molded for 150 cycles by adopting an injection molding machine at injection temperatures of 290°C, 285°C, 280°C, and 260°C, the mold deposit sample in the final collection mold is removed, and the mass of the injection molding mold deposit is obtained by weighing.

In a second aspect, the present invention provides a method for preparing the polyamide composite material according to the first aspect, including: melt-blending the polyamide resin, the reinforcing material, and the organic phosphonate flame retardant, followed by extrusion, to obtain the polyamide composite material.

Preferably, the preparation method includes the following steps:
mixing the polyamide resin and the organic phosphonate flame retardant to obtain a premix; and
melt-blending the premix and the reinforcing material, followed by extrusion, to obtain the polyamide composite material, where
preferably, a mixed material further includes any one or a combination of at least two of a melamine flame retardant, a synergistic flame retardant, an antioxidant, and a lubricant.

Preferably, the melt blending is performed in a screw extruder.

Preferably, the screw extruder is a twin-screw extruder.

Preferably, a temperature of the screw extruder is 180-330°C, and for example, may be 190°C, 200°C, 210°C, 220°C, 230°C, 240°C, 250°C, 260°C, 270°C, 280°C, 290°C, 300°C, 310°C, or 320°C, as well as specific point values among the above point values. For reasons of limited space and for the sake of brevity, the specific point values included in the range are not exhaustively enumerated in the present invention.

Preferably, the extrusion is further followed by steps of pelletizing and drying.

In a third aspect, the present invention provides an application of the polyamide composite material according to the first aspect in an electronic and electrical appliance, an electrical product component, an energy storage device, a connector, or an automotive part.

Preferably, the polyamide composite material is applied to a connector, a current-carrying part in a power distributor, a circuit board, a potting material, a power plug, a safety switch, a lamp housing, an LED housing, a capacitor housing, a coil pipe, a fan, a protective contact, a cable, a charger connecting wire, an engine cover, a fabric coating, a vehicle seat, a connector housing, a circuit breaker housing, a contactor housing, or an electromagnetic switch.

Compared with the prior art, the present invention has the following beneficial effects:
In the polyamide composite material provided by the present invention, by adopting an organic phosphonate flame retardant with a low acid value, occurrence of dialkylphosphinic acid released during decomposition in a high-temperature process can be slowed down, so that the quantity of mold deposits produced by the polyamide composite material in an injection molding process is significantly reduced, thereby improving injection molding production efficiency and article appearance. Meanwhile, the polyamide composite material has a significantly reduced content of water-boiling precipitates, and excellent heat and humidity resistance stability, which prolongs its service life under hot and humid conditions.

### DETAILED DESCRIPTION OF EMBODIMENTS

The technical solutions of the present invention are further described below through specific embodiments. Those skilled in the art should understand that examples described are merely to facilitate an understanding of the present invention and should not be regarded as specific limitations to the present invention.

In a specific embodiment, a method for preparing the organic phosphonate flame retardant includes the following method I or method II.

The method I includes the following steps:
(A1) subjecting an aqueous hypophosphite solution and an antioxidant to a free-radical reaction with ethylene in the presence of an initiator to obtain an aqueous diethylphosphinate solution;
(A2) mixing the aqueous diethylphosphinate solution obtained in step (A1), an aqueous metal salt solution, and an alkaline solution, and carrying out a reaction under a condition of a pH value of 3.5-3.8 to obtain a diethylphosphinate metal salt slurry; and
(A3) mixing and stirring the diethylphosphinate metal salt slurry obtained in step (A2) with a flocculant to obtain a diethylphosphinate metal salt flocculate; and filtering, washing, and drying the diethylphosphinate metal salt flocculate to obtain the organic phosphonate flame retardant.

The method II includes the following steps:
(B1) subjecting an aqueous hypophosphorous acid solution and an antioxidant to a free radical reaction with ethylene under the action of an initiator to obtain an aqueous diethylphosphinic acid solution;
(B2) subjecting the aqueous diethylphosphinic acid solution obtained in step (B1), sulfuric acid, and a metal hydroxide to a reaction, followed by adding an alkaline solution to obtain a diethylphosphinate slurry with a pH value of 3.8-4.2; and
(B3) mixing and stirring the diethylphosphinate slurry obtained in step (B2) with a flocculant to obtain a diethylphosphinate flocculate; and filtering, washing, and drying the diethylphosphinate flocculate to obtain the organic phosphonate flame retardant.

In a specific embodiment of the present invention, the method for preparing the organic phosphonate flame retardant is designed. Through the design of materials such as the antioxidant and the flocculant, the design of process steps and process parameters such as pH, and their combined action, the organic phosphonate flame retardant with a low acid value is prepared. When used in the polyamide composite material, the organic phosphonate flame retardant can reduce mold deposits and make the polyamide composite material have a lower content of water-boiling precipitates, greatly improving the hot and humid stability and service life under hot and humid conditions of the polyamide composite material.

In a preferred embodiment, the antioxidants in step (A1) and step (B1) each independently include any one or a combination of at least two of a hindered phenol antioxidant, a hindered amine antioxidant, a phosphite antioxidant, and a thioester antioxidant, preferably any one or a combination of at least two of a hindered phenol antioxidant, a phosphite antioxidant, and a thioester antioxidant.

In a preferred embodiment, the antioxidants in step (A1) and step (B1) each independently include any one or a combination of at least two of pentaerythritol tetrakis(β-(3,5-di-tert-butyl-4-hydroxyphenyl)propionate) (antioxidant 1010), n-octadecyl β-(3,5-di-tert-butyl-4-hydroxyphenyl)propionate (antioxidant 1076), N,N'-bis-(3-(3,5-di-tert-butyl-4-hydroxyphenyl)propionyl)hexanediamine (antioxidant 1098), tris(2,4-di-tert-butylphenyl) phosphite (antioxidant 168), 2,6-di-tert-butyl-p-cresol (antioxidant BHT), distearyl β,β'-thiodipropionate (antioxidant DSTP), antioxidant 215, and antioxidant 225.

The antioxidant may be a single component, such as any one of the antioxidants listed above, and may also be a composite antioxidant compounded from multiple components, such as a combination of a hindered phenol antioxidant and a phosphite antioxidant. A typical combination is a compound of antioxidant 1010 and antioxidant 168 in different ratios, such as antioxidant 215, antioxidant 225, and the like.

In a preferred specific embodiment, the initiators in step (A1) and step (B1) each independently include any one or a combination of at least two of an organic peroxide, a persulfate, an azo initiator, and a photoinitiator.

In a preferred specific embodiment, the organic peroxide includes any one or a combination of at least two of diisobutyryl peroxide, benzoyl peroxide, bis(2-ethylhexyl) peroxydicarbonate, diisopropyl peroxydicarbonate, 1,1,3,3-tetramethylbutyl peroxypivalate, tert-butyl peroxypivalate, tert-amyl peroxypivalate, dilauroyl peroxide, bis(3,3,5-trimethylhexanoyl) peroxide, 2,5-dimethyl-2,5-bis(2-ethylhexanoylperoxy)hexane, 1,1,3,3-tetramethylbutyl peroxy-2-ethylhexanoate, bis(4-methylbenzoyl) peroxide, tert-amyl peroxy-2-ethylhexanoate, tert-butyl peroxy-2-ethylhexanoate, tert-butyl peroxyisobutyrate, 1,1-di(tert-butylperoxy)-3,3,5-trimethylcyclohexane, 1,1-di(tert-amylperoxy)cyclohexane, 1,1-di(tert-butylperoxy)cyclohexane, di(tert-butyl) peroxide, di(tert-amyl) peroxide, dicumyl peroxide, 2,5-di(tert-butylperoxy)-2,5-dimethylhexane, tert-butyl peroxyacetate, tert-amyl peroxybenzoate, tert-butyl peroxymaleate, and tert-butyl peroxy-2-ethylhexyl carbonate.

In a preferred specific embodiment, the persulfate includes any one or a combination of at least two of sodium persulfate, potassium persulfate, and ammonium persulfate.

In a preferred specific embodiment, the azo initiator includes any one or a combination of at least two of 2,2'-azobis(2-methylpropionitrile), 2,2'-azobis(2,4-dimethylvaleronitrile), 2,2'-azobis(2-methylpropionamidine) dihydrochloride, 2,2'-azobis[2-(2-imidazolin-2-yl)propane] dihydrochloride, and 1-((cyano-1-methylethyl)azo)formamide.

It should be noted that the present invention imposes no particular limitation on the specific selection of photoinitiators, and photoinitiators commonly used in the art are all suitable.

In a preferred specific embodiment, the flocculants in step (A3) and step (B3) each independently include any one or a combination of at least two of a polyacrylamide flocculant, a starch flocculant, and a chitin flocculant, more preferably a polyacrylamide flocculant, and further preferably anionic polyacrylamide and/or non-ionic polyacrylamide.

In the method I, the hypophosphite preferably includes sodium hypophosphite and/or potassium hypophosphite, thereby obtaining an aqueous solution of sodium diethylphosphinate and/or potassium diethylphosphinate.

It should be noted that the hypophosphite may be an anhydrous hypophosphite and/or a hypophosphite hydrate.

In a preferred specific embodiment, the hypophosphite is sodium hypophosphite, and step (A1) yields an aqueous solution of sodium diethylphosphinate.

In a preferred specific embodiment, a mass percentage content of the hypophosphite in the aqueous hypophosphite solution in step (A1) is 10-60%, and for example, may be 15%, 20%, 25%, 30%, 35%, 40%, 45%, 50%, or 55%, further preferably 30-40%.

In a preferred specific embodiment, a mass ratio of the hypophosphite to the antioxidant in step (A1) is 100:(0.02-1.2), and for example, may be 100:0.04, 100:0.05, 100:0.06, 100:0.08, 100:0.1, 100:0.2, 100:0.3, 100:0.4, 100:0.5, 100:0.6, 100:0.7, 100:0.8, 100:0.9, 100:0.95, 100:1, 100:1.05, 100:1.1, or 100:1.15, further preferably 100:(0.05-1).

In a preferred specific embodiment, a mass ratio of the hypophosphite to the initiator in step (A1) is 100:(0.1-5), and for example, may be 100:0.2, 100:0.5, 100:1, 100:1.5, 100:2, 100:2.5, 100:3, 100:3.5, 100:4, 100:4.5, or 100:4.8.

It should be noted that the initiator in step (A1) may be added in one portion, in batches, or continuously in the reaction process; furthermore, a portion of the initiator in step (A1) may be added in advance, and the remainder is added continuously in the reaction process.

In a preferred specific embodiment, a molar ratio of the ethylene to the hypophosphite in step (A1) is (2-2.1):1, and for example, may be 2.01:1, 2.02:1, 2.04:1, 2.05:1, 2.06:1, 2.08:1, or 2.09:1.

In a preferred specific embodiment, the free radical reaction in step (A1) is carried out under a protective atmosphere.

In a preferred specific embodiment, the protective atmosphere includes a nitrogen atmosphere and/or an argon atmosphere.

In a preferred specific embodiment, a temperature of the free-radical reaction in step (A1) is 70-120°C, and for example, may be 75°C, 80°C, 85°C, 90°C, 95°C, 100°C, 105°C, 110°C, or 115°C, more preferably 80-110°C, and further preferably 90-105°C.

The free-radical reaction in step (A1) is carried out in the presence of an initiator. When a pressure of a reaction system substantially no longer changes, the reaction can be regarded as complete and stopped.

In a preferred specific embodiment, a time of the free radical reaction in step (A1) is 2-16 h, and for example, may be 3 h, 4 h, 5 h, 6 h, 7 h, 8 h, 9 h, 10 h, 11 h, 12 h, 13 h, 14 h, or 15 h.

In the present invention, the metal salt in step (A2) is a water-soluble metal salt. Preferably, the metal salt includes a metal sulfate and/or a metal chloride, more preferably a metal sulfate.

In a preferred specific embodiment, a metal in the metal salt in step (A2) includes any one or a combination of at least two of Al, Ca, Cu, Zn, Fe, and Ti, further preferably Al.

In a preferred specific embodiment, the metal salt in step (A2) includes aluminum sulfate.

It should be noted that the metal salt may be an anhydrous metal salt and/or a metal salt hydrate.

In a preferred specific embodiment, a mass percentage content of the metal salt in the aqueous metal salt solution in step (A2) is 20-40%, and for example, may be 22%, 25%, 28%, 30%, 32%, 35%, or 38%.

In a preferred specific embodiment, a molar ratio of the metal salt to diethylphosphinate in step (A2) is 1:(5.8-6.2), and for example, may be 1:5.82, 1:5.85, 1:5.88, 1:5.9, 1:5.92, 1:5.95, 1:5.98, 1:6, 1:6.02, 1:6.05, 1:6.08, 1:6.1, 1:6.12, 1:6.15, or 1:6.18, further preferably 1:6.

In a specific embodiment, a pH value of a reaction system in step (A2) is 3.5-3.8, and for example, may be 3.52, 3.55, 3.58, 3.6, 3.62, 3.65, 3.68, 3.7, 3.72, 3.75, or 3.78, or the like.

In a preferred specific embodiment, the alkaline solution in step (A2) includes a sodium hydroxide solution and/or a potassium hydroxide solution.

The present invention imposes no particular limitation on a mass concentration of the sodium hydroxide solution and the potassium hydroxide solution. It is only required to add the sodium hydroxide solution and/or the potassium hydroxide solution to maintain a pH of the reaction system obtained in step (A2) at 3.5-3.8.

In a preferred specific embodiment, a temperature of the reaction in step (A2) is 20-80°C, and for example, may be 25°C, 30°C, 35°C, 40°C, 45°C, 50°C, 55°C, 60°C, 65°C, 70°C, or 75°C, further preferably 40-60°C.

In a preferred specific embodiment, a time of the reaction in step (A2) is 0.1-5 h, and for example, may be 0.2 h, 0.5 h, 0.8 h, 1 h, 1.2 h, 1.5 h, 1.8 h, 2 h, 2.2 h, 2.5 h, 2.8 h, 3 h, 3.2 h, 3.5 h, 3.8 h, 4 h, or 4.5 h.

It should be noted that, in step (A2), the aqueous metal salt solution and the alkaline solution are simultaneously added into the aqueous diethylphosphinate solution to carry out the reaction, or the aqueous metal salt solution, the alkaline solution, and the aqueous diethylphosphinate solution are continuously added into a reaction device (such as a stirred reaction kettle, a static mixer, or a dynamic mixer) at a constant flow rate for sufficient mixing and reaction. When the aqueous metal salt solution and the alkaline solution are simultaneously added into the aqueous diethylphosphinate solution to carry out the reaction, a reaction temperature is 20-80°C, preferably 30-70°C, and further preferably 40-60°C, and a dropping time of the aqueous metal salt solution and the alkaline solution is 0.1-5 h (for example, 0.5 h, 1 h, 1.5 h, 2 h, 2.5 h, 3 h, 3.5 h, 4 h, 4.5 h, etc.), preferably 0.5-3 h, and further preferably 1 h-3 h. When the aqueous metal salt solution, the alkaline solution, and the aqueous diethylphosphinate solution are continuously added into a reaction vessel at a constant flow rate, a reaction temperature is 40-80°C, preferably 50-60°C, and a reaction space velocity is 0.1-2/h (for example, 0.2/h, 0.5/h, 0.8/h, 1/h, 1.2/h, 1.5/h, 1.8/h, etc.), preferably 0.3-1/h, and further preferably 0.5-0.8/h.

In a preferred specific embodiment, in step (A3), based on a theoretical mass obtained of the diethylphosphinate metal salt as 100%, a mass of the flocculant is 0.01-0.5%, and for example, may be 0.02%, 0.05%, 0.08%, 0.1%, 0.12%, 0.15%, 0.18%, 0.2%, 0.22%, 0.25%, 0.28%, 0.3%, 0.32%, 0.35%, 0.38%, 0.4%, 0.42%, 0.45%, or 0.48%.

The "theoretical mass obtained of the diethylphosphinate metal salt" is calculated from feeding amounts of the diethylphosphinate and the metal salt in step (A2).

In a preferred specific embodiment, the flocculant may be first mixed with water at 20-30°C for 10-20 min to obtain a flocculant solution, and then the flocculant solution is mixed and stirred with the diethylphosphinate metal salt slurry. A mass ratio of the flocculant to water is 1:(10-1000), and for example, may be 1:50, 1:100, 1:200, 1:300, 1:400, 1:500, 1:600, 1:700, 1:800, 1:900, or 1:950, or the like.

In a preferred specific embodiment, a temperature of the mixing in step (A3) is 40-60°C, and for example, may be 42°C, 44°C, 46°C, 48°C, 50°C, 52°C, 54°C, 56°C, or 58°C.

In a preferred specific embodiment, the number of washings in step (A3) is ≥ 4, and for example, may be 5, 6, 7, 8, 9, 10, or 12, further preferably 5-10. Multiple washings after filtration of the diethylphosphinate flocculate can better remove impurities and acidic substances from a product, so as to obtain the organic phosphonate flame retardant with a low acid value.

Preferably, a washing agent used for the washing is water.

Preferably, a mass ratio of water to a solid in each washing is independently (1-10):1, and for example, may be 2:1, 3:1, 4:1, 5:1, 6:1, 7:1, 8:1, or 9:1, further preferably (1.5-6):1. The solid refers to a solid product obtained by filtration.

Preferably, a temperature of the drying in step (A3) is 105-250°C, and for example, may be 110°C, 120°C, 130°C, 140°C, 150°C, 160°C, 180°C, 200°C, 220°C, or 240°C, as well as specific point values among the above point values. For reasons of limited space and for the sake of brevity, the specific point values included in the range are not exhaustively enumerated in the present invention. Further preferably, the temperature is 110-150°C.

In a preferred specific embodiment, the method I specifically includes the following steps:
(A1) subjecting an aqueous hypophosphite solution and an antioxidant to a free radical reaction with ethylene in the presence of an initiator in a protective atmosphere to obtain an aqueous diethylphosphinate solution,
   where a mass percentage content of hypophosphite in the aqueous hypophosphite solution is 10-60%, and a mass ratio of the hypophosphite, the antioxidant, and the initiator is 100:(0.02-1.2):(0.1-5); and a temperature of the free radical reaction is 70-120°C, and the reaction is terminated when a pressure of a system no longer changes;
(A2) mixing the aqueous diethylphosphinate solution, an aqueous metal salt solution, and an alkaline solution, and carrying out a reaction under conditions of a pH value of 3.5-3.8 and 40-60°C to obtain a diethylphosphinate metal salt slurry,
   where a molar ratio of the metal salt to a diethylphosphinate is 1:(5.9-6.1), and a mass percentage content of the metal salt in the aqueous metal salt solution is 20-40%; and
(A3) mixing and stirring the diethylphosphinate metal salt slurry and a flocculant solution at 40-60°C to obtain a diethylphosphinate flocculate; and filtering the diethylphosphinate flocculate, washing ≥ 4 times, and drying to obtain the organic phosphonate flame retardant,
   where based on a theoretical mass obtained of the diethylphosphinate metal salt as 100%, a mass of the flocculant is 0.01-0.5%.

In a preferred specific embodiment, a mass percentage content of hypophosphorous acid in the aqueous hypophosphorous acid solution in step (B1) is 20-70%, and for example, may be 25%, 30%, 35%, 40%, 45%, 50%, 55%, 60%, or 65%, further preferably 45-55%.

In a preferred specific embodiment, a mass ratio of the hypophosphorous acid to the antioxidant in step (B1) is 100:(0.02-1.2), and for example, may be 100:0.04, 100:0.05, 100:0.06, 100:0.08, 100:0.1, 100:0.2, 100:0.3, 100:0.4, 100:0.5, 100:0.6, 100:0.7, 100:0.8, 100:0.9, 100:0.95, 100:1, 100:1.05, 100:1.1, or 100:1.15, further preferably 100:(0.05-1).

In a preferred specific embodiment, a mass ratio of the hypophosphorous acid to the initiator in step (B1) is 100:(0.1-5), and for example, may be 100:0.2, 100:0.5, 100:1, 100:1.5, 100:2, 100:2.5, 100:3, 100:3.5, 100:4, 100:4.5, or 100:4.8.

It should be noted that the initiator in step (B1) of the present invention may be added in one portion, in batches, or continuously in the reaction process; furthermore, a portion of the initiator in step (B1) may be added in advance, and the remainder is added continuously in the reaction process.

In a preferred specific embodiment, a molar ratio of the ethylene to the hypophosphorous acid in step (B1) is (2-2.1):1, and for example, may be 2.01:1, 2.02:1, 2.04:1, 2.05:1, 2.06:1, 2.08:1, or 2.09:1.

In a preferred specific embodiment, the free radical reaction in step (B1) is carried out under a protective atmosphere.

In a preferred specific embodiment, the protective atmosphere includes a nitrogen atmosphere and/or an argon atmosphere.

In a preferred specific embodiment, a temperature of the free radical reaction in step (B1) is 60-105°C, and for example, may be 65°C, 70°C, 75°C, 80°C, 85°C, 90°C, 95°C, or 98°C, more preferably 70-100°C, and further preferably 75-95°C.

The free-radical reaction in step (B1) is carried out in the presence of an initiator. When a pressure of a reaction system substantially no longer changes, the reaction can be regarded as complete and stopped.

In a preferred specific embodiment, a time of the free radical reaction in step (B1) is 2-16 h, and for example, may be 3 h, 4 h, 5 h, 6 h, 7 h, 8 h, 9 h, 10 h, 11 h, 12 h, 13 h, 14 h, or 15 h.

In a preferred specific embodiment, the metal hydroxide in step (B2) includes any one or a combination of at least two of aluminum hydroxide, calcium hydroxide, copper hydroxide, zinc hydroxide, iron hydroxide, and titanium hydroxide, more preferably aluminum hydroxide.

In a preferred specific embodiment, the iron hydroxide includes ferrous hydroxide and/or ferric hydroxide.

By adopting the above metal hydroxide, a cation in the diethylphosphinate obtained in step (B2) includes any one of Al, Ca, Cu, Zn, Fe, or Ti, more preferably Al.

In a preferred specific embodiment, in step (B2), based on a molar amount of diethylphosphinic acid as 100%, a molar amount of the metal hydroxide is 30-50 mol%, and for example, may be 32 mol%, 33 mol%, 33.3 mol%, 34 mol%, 35 mol%, 36 mol%, 38 mol%, 40 mol%, 42 mol%, 45 mol%, or 48 mol%.

In a preferred specific embodiment, in step (B2), based on a molar amount of diethylphosphinic acid as 100%, a molar amount of the sulfuric acid is 5-50 mol%, and for example, may be 8 mol%, 10 mol%, 12 mol%, 15 mol%, 18 mol%, 20 mol%, 22 mol%, 25 mol%, 28 mol%, 30 mol%, 32 mol%, 35 mol%, 38 mol%, 40 mol%, 42 mol%, 45 mol%, or 48 mol%, or the like, further preferably 8-30 mol%, and more preferably 10-15 mol%.

In a preferred specific embodiment, a temperature of the reaction in step (B2) is 70-150°C, and for example, may be 75°C, 80°C, 90°C, 100°C, 110°C, 120°C, 130°C, 140°C, or 145°C, further preferably 80-120°C, and more preferably 90-100°C.

Preferably, a time of the reaction in step (B2) is 2-12 h, and for example, may be 3 h, 4 h, 5 h, 6 h, 7 h, 8 h, 9 h, 10 h, 11 h, or 11.5 h.

In the present invention, a pH value of the diethylphosphinate slurry in step (B2) is 3.8-4.2, and for example, may be 3.82, 3.85, 3.88, 3.9, 3.92, 3.95, 3.98, 4, 4.02, 4.05, 4.08, 4.1, 4.12, 4.15, or 4.18.

In a preferred specific embodiment, the alkaline solution in step (B2) includes a sodium hydroxide solution and/or a potassium hydroxide solution.

The present invention imposes no particular limitation on a mass concentration of the sodium hydroxide solution and the potassium hydroxide solution. It is only required to add the sodium hydroxide solution and/or the potassium hydroxide solution to maintain a pH of the diethylphosphinate slurry obtained in step (B2) at 3.8-4.2.

In a preferred specific embodiment, in step (B3), based on a theoretical mass obtained of the diethylphosphinate as 100%, a mass of the flocculant is 0.01-0.5%, and for example, may be 0.02%, 0.05%, 0.08%, 0.1%, 0.12%, 0.15%, 0.18%, 0.2%, 0.22%, 0.25%, 0.28%, 0.3%, 0.32%, 0.35%, 0.38%, 0.4%, 0.42%, 0.45%, or 0.48%.

The "theoretical mass obtained of the diethylphosphinate" is calculated from feeding amounts of the diethylphosphinic acid and the metal hydroxide in step (B2).

In a preferred specific embodiment, the flocculant may be first mixed with water at 20-30°C for 10-20 min to obtain a flocculant solution, and then the flocculant solution is mixed and stirred with the diethylphosphinate slurry. A mass ratio of the flocculant to water is 1:(10-1000), and for example, may be 1:50, 1:100, 1:200, 1:300, 1:400, 1:500, 1:600, 1:700, 1:800, 1:900, or 1:950, or the like.

In a preferred specific embodiment, a temperature of the mixing in step (B3) is 40-60°C, and for example, may be 42°C, 44°C, 46°C, 48°C, 50°C, 52°C, 54°C, 56°C, or 58°C.

In a preferred specific embodiment, the number of washings in step (B3) is ≥ 4, and for example, may be 5, 6, 7, 8, 9, 10, or 12, further preferably 5-10.

Preferably, a washing agent used for the washing is water.

Preferably, a mass ratio of water to a solid in each washing is independently (1-10):1, and for example, may be 2:1, 3:1, 4:1, 5:1, 6:1, 7:1, 8:1, or 9:1, further preferably (1.5-6):1. The solid refers to a solid product obtained by filtration.

Preferably, a temperature of the drying in step (B3) is 105-250°C, and for example, may be 110°C, 120°C, 130°C, 140°C, 150°C, 160°C, 180°C, 200°C, 220°C, or 240°C, as well as specific point values among the above point values. For reasons of limited space and for the sake of brevity, the specific point values included in the range are not exhaustively enumerated in the present invention. Further preferably, the temperature is 110-150°C.

In a preferred specific embodiment, the method II specifically includes the following steps:
(B1) subjecting an aqueous hypophosphorous acid solution and an antioxidant to a free radical reaction with ethylene under the action of an initiator in a protective atmosphere to obtain an aqueous diethylphosphinic acid solution,
   where a mass concentration of the aqueous hypophosphorous acid solution is 20-70%, and a mass ratio of the hypophosphorous acid, the antioxidant, and the initiator is 100:(0.02-1.2):(0.1-5); and a temperature of the free radical reaction is 60-100°C, and the reaction is terminated when a pressure of a system no longer changes;
(B2) subjecting the aqueous diethylphosphinic acid solution, sulfuric acid, and a metal hydroxide to a reaction at 70-150°C for 2-12 h, followed by adding an alkaline solution to adjust a pH of a system to 3.8-4.2 to obtain a diethylphosphinate slurry,
   where based on a molar amount of the diethylphosphinic acid as 100%, a molar amount of the metal hydroxide is 30-50 mol%, and a molar amount of the sulfuric acid is 5-50 mol%; and
(B3) mixing and stirring the diethylphosphinate slurry and a flocculant solution at 40-60°C to obtain a diethylphosphinate flocculate; and filtering the diethylphosphinate flocculate, washing ≥ 4 times, and drying to obtain the organic phosphonate flame retardant,
   where based on a theoretical mass obtained of the diethylphosphinate as 100%, a mass of the flocculant is 0.01-0.5%.

It should be noted that the method for preparing the organic phosphonate flame retardant according to the present invention is not limited to the aforementioned method I and method II. Those skilled in the art may also select other methods or routes to obtain the organic phosphonate flame retardant with a low acid value proposed in the present invention.

In the following specific embodiments, test methods for the organic phosphonate flame retardant are as follows:
(1) Test for contents of a diethylphosphinate, an ethylbutylphosphinate, an ethylphosphonate, and a monoethylphosphinate

The contents are analyzed and determined via testing by adopting a liquid chromatograph (LC20A, Shimadzu, Japan). A commercially available standard sample is adopted for the diethylphosphinate. The pure product of the ethylbutylphosphinate (prepared with reference to Example 4 of CN103172668A) is adopted as the standard sample. The pure product of the ethylphosphonate (prepared with reference to Example 2 of CN104371142A) is adopted as the standard sample. The pure product of the monoethylphosphinate (prepared with reference to Example 1 of CN103172668A) is adopted as the standard sample. The sample to be tested is dissolved in an aqueous sulfuric acid solution (mass concentration 30%) with 5 times the mass of the sample, and then diluted 20 times with the mobile phase for analysis and testing. The mobile phase is a mixture of water and methanol at a mass ratio of 9:1, added with trifluoroacetic acid at a volume content of 0.5%. A ShimNex CS C18 column (5 µm, 4.6×250 mm) is adopted, with a flow rate of 0.6 mL/min. The mass content of each component is calculated by the area normalization method.

### (2) Content of an alkali-insoluble substance

5 g of the sample to be tested is taken and stirred with 500 g of an aqueous sodium hydroxide solution (mass concentration 3%) at 35°C for 30 min, filtered with filter paper having a precision of ≤ 2 µm, and rinsed with 100 g of water 3 times. The filter paper is dried and then weighed, and the mass increase value relative to the filter paper before filtration (dry filter paper) is the mass of the insoluble substance. The ratio of the mass of the insoluble substance to the mass of the sample to be tested (5 g) is the mass content of the alkali-insoluble substance.

### (3) Content of other phosphorus-containing compounds

The sample to be tested is mixed with a deuterated aqueous solution of deuterated sodium hydroxide (mass concentration 10%) at a mass ratio of 1:30 to completely dissolve the sample, followed by filtration. The obtained clear liquid is measured by a nuclear magnetic resonance spectrometer (NMR, Bruker nuclear magnetic resonance NMR spectrometer, AVANCE NEO 400 MHz) to obtain a phosphorus nuclear magnetic resonance spectrum. The phosphorus nuclear magnetic resonance spectrum is integrated, and the proportion of the integrated area of peaks other than the known diethylphosphinate, ethylbutylphosphinate, ethylphosphonate, and monoethylphosphinate is regarded as the content of other phosphorus-containing compounds.

### (4) Water-soluble acid value

1 g of the sample to be tested is taken, added with 5.00±0.01 g (mₑₜₕₐₙₒₗ) of ethanol for uniform wetting, and then added with 50±0.01 g (m_{water}) of room-temperature water. The total weight m₀ is weighed together with the bottle and the stirrer. After sealed water boiling at 90°C for 1 h, the mixture is cooled to 25°C and kept at a constant temperature for 30 min, and then supplemented with an aqueous ethanol solution (mass ratio of ethanol to water: 1:10) to the total weight m₀. Filtration is performed to obtain a clear filtrate with a mass of m₁, the clear filtrate is subjected to a potentiometric titration test method to determine the test acid value, and the potentiometric titration test method is adopted to determine the blank acid value of (m_{water} + mₑₜₕₐₙₒₗ), where the concentration of the potassium hydroxide solution adopted for titration is 0.05 mol/L, and water-soluble acid value = test acid value × (m_{water} + mₑₜₕₐₙₒₗ)/m₁ - blank acid value.

### (5) Organic acid value

1 g of the sample to be tested is taken, added with 50.0±0.01 g (m_{dichloromethane}) of dichloromethane for uniform wetting. The total weight m₀ is weighed together with the bottle and the stirrer. After sealed boiling at 90°C for 1 h, the mixture is cooled to 25°C and kept at a constant temperature for 30 min, and then supplemented with dichloromethane to the total weight m₀. Filtration is performed to obtain a clear filtrate with a mass of m₁, the clear filtrate is subjected to a potentiometric titration test method to determine the test acid value, and the potentiometric titration test method is adopted to determine the blank acid value of dichloromethane with a mass of m_{dichloromethane}, where the concentration of the potassium hydroxide solution adopted for titration is 0.05 mol/L, and organic acid value = test acid value × m_{dichloromethane}/m₁ - blank acid value.

### (6) Mass content of a sulfate radical

The measurement is performed by an ion chromatography technique with an external standard method with reference to the method in Standard EN 14582:2007-"Determination of Halogen Content."

In the following specific embodiments of the present invention, all materials for which no preparation method is provided are commercially available chemicals, and the specific information of some materials is as follows:

| | Grade, manufacturer |
|---|---|
| Sodium hypophosphite monohydrate | Changshu New-Tech Chemicals Co., Ltd. |
| Hypophosphorous acid | 50 wt% aqueous solution, Changshu New-Tech Chemicals Co., Ltd. |
| Sodium persulfate | National standard superior grade, Fujian Zhanhua Chemical Co., Ltd. |
| Antioxidant 1010 | RIANOX 1010, Rianlon Corporation |
| Antioxidant 168 | RIANOX 168, Rianlon Corporation |
| Antioxidant 1076 | RIANOX 1076, Rianlon Corporation |
| Ethylene | Content ≥ 99.9%, industrial cylinder ethylene |
| Aluminum sulfate | High whiteness iron-free aluminum sulfate, Shandong Landing New Energy Technology Co., Ltd. |
| Flocculant: anionic polyacrylamide | Gongyi Xinqi Polymer Co., Ltd. |

The method for preparing the organic phosphonate flame retardant according to the present invention will be described in detail below by way of multiple preparation examples, but the preparation method of the organic phosphonate flame retardant is not limited to these preparation examples.

### Preparation Examples 1-5, Comparative Preparation Examples 1-6

A method for preparing an organic phosphonate flame retardant included the following steps:
(1) 31.8 kg of solid sodium hypophosphite monohydrate, 40 kg of water, 200 g of sodium persulfate, antioxidant 1010 with a mass of m₁, and antioxidant 168 with a mass of m₂ were placed into an autoclave. The autoclave was purged with nitrogen 3 times. Ethylene was pressurized to a constant pressure of 1.5 MPa via a pressure reducer, and the system was heated to 100°C and held at this temperature for 4 h. During the 4-h temperature holding, 2500 g of an aqueous sodium persulfate solution with a mass percentage content of 15% was continuously supplemented. The system was then held at 100°C for another 1 h, cooled, and vented to obtain an aqueous sodium diethylphosphinate solution.
(2) The aqueous sodium diethylphosphinate solution obtained in step (1) was diluted to a mass percentage content of sodium diethylphosphinate of 20% (containing 6 mol of sodium diethylphosphinate), and was heated to temperature T₁. An aqueous aluminum sulfate solution (1 mol of aluminum sulfate, mass percentage content 25%) was continuously added dropwise within 1 h, and the pH value was controlled using a potassium hydroxide solution (mass percentage content 5%) to obtain an aluminum diethylphosphinate slurry.
(3) At 50°C, an aqueous flocculant solution prepared from anionic polyacrylamide with a mass of m₃ and 50 g of water was added to the aluminum diethylphosphinate slurry obtained in step (2). The mixture was stirred until a flocculated state was reached, followed by filtration. The filter cake was washed n times with water of 3 times its mass, and was dried at 120°C to constant weight to obtain the organic phosphonate flame retardant.

Specific process parameters of the preparation method and relevant data of the prepared organic phosphonate flame retardant are as shown in Table 1.

**Table 1**

| | | Prep arati on Exa mple 1 | Prep arati on Exa mple 2 | Prep arati on Exa mple 3 | Prep arati on Exa mple 4 | Prep arati on Exa mple 5 | Com parat ive Prep arati on Example 1 | Com parat ive Prep arati on Example 2 | Com parat ive Prep arati on Example 3 | Com parat ive Prep arati on Example 4 | Com parat ive Prep arati on Example 5 | Com parat ive Prep arati on Example 6 |
|---|---|---|---|---|---|---|---|---|---|---|---|---|
| Step (1) | m₁ (g) | 10 | 25 | 50 | 25 | 25 | 0 | 25 | 25 | 25 | 25 | 25 |
| | m₂ (g) | 10 | 25 | 50 | 25 | 25 | 0 | 25 | 25 | 25 | 25 | 25 |
| Step (2) | T₁ (°C) | 50 | 50 | 40 | 60 | 50 | 50 | 50 | 35 | 65 | 50 | 50 |
| | pH value | 3.6 | 3.7 | 3.8 | 3.5 | 3.7 | 3.6 | 3.7 | 3.7 | 3.7 | 4 | 3.3 |
| Step (3) | m₃ (g) | 0.5 | 0.5 | 0.5 | 0.1 | 2 | 0.5 | 0 | 0.5 | 0.5 | 0.5 | 0.5 |
| | n (times) | 5 | 5 | 5 | 5 | 7 | 5 | 5 | 5 | 5 | 5 | 5 |
| Organic phosphonate flame retardant No. | | S1 | S2 | S3 | S4 | S5 | D1 | D2 | D3 | D4 | D5 | D6 |
| Aluminum diethylphosphin ate (parts) | | 98.6 8 | 98.7 7 | 98.7 1 | 98.6 9 | 98.6 2 | 98.7 | 98.5 3 | 98.4 9 | 98.5 9 | 98.8 | 98.7 4 |
| Aluminum ethylbutylphosp hinate (parts) | | 0.71 | 0.61 | 0.78 | 0.66 | 0.73 | 0.53 | 0.88 | 0.63 | 0.69 | 0.57 | 0.58 |
| Aluminum ethylphosphonat e (parts) | | 0.15 | 0.14 | 0.12 | 0.16 | 0.13 | 0.15 | 0.22 | 0.42 | 0.18 | 0.24 | 0.13 |
| Aluminum monoethylphosp hinate (parts) | | 0.18 | 0.17 | 0.13 | 0.13 | 0.14 | 0.12 | 0.14 | 0.13 | 0.14 | 0.10 | 0.15 |
| Alkali-insoluble substance (parts) | | 0 | 0 | 0 | 0 | 0 | 0 | 0 | 0 | 0 | 0 | 0 |
| Other phosphorus-containing compounds (parts) | | 0.28 | 0.31 | 0.26 | 0.36 | 0.38 | 0.5 | 0.23 | 0.33 | 0.4 | 0.29 | 0.40 |
| Sulfate radical (ppm) | | 239 | 383 | 159 | 275 | 101 | 292 | 300 | 365 | 279 | 367 | 281 |
| Water-soluble acid value (mg KOH/g) | | 0.20 9 | 0.23 1 | 0.19 1 | 0.25 8 | 0.28 2 | 0.39 1 | 0.37 4 | 0.33 3 | 0.34 1 | 0.33 9 | 0.42 9 |
| Organic acid value (mg KOH/g) | | 0.01 6 | 0.02 1 | 0.00 2 | 0.01 4 | 0.00 4 | 0.05 9 | 0.04 9 | 0.04 7 | 0.03 7 | 0.05 2 | 0.05 6 |

### Preparation Examples 6-8, Comparative Preparation Examples 7-10

A method for preparing an organic phosphonate flame retardant was as follows:
(1) 39.6 kg of an aqueous hypophosphorous acid solution with a mass percentage content of 50%, 500 g of sodium persulfate, and an antioxidant with a mass of m₄ were placed into an autoclave. The autoclave was purged with nitrogen 3 times. Ethylene was pressurized to a constant pressure of 1.5 MPa via a pressure reducer, and the system was heated to 85°C and held at this temperature for 5.5 h. During the temperature holding, 3500 g of an aqueous sodium persulfate solution with a mass percentage content of 10% was continuously supplemented. Then the system was held at 85°C for 1.5 h, cooled, and vented to obtain an aqueous diethylphosphinic acid solution.
(2) The aqueous diethylphosphinic acid solution obtained in step (1) (diethylphosphinic acid: 6 mol), an aqueous sulfuric acid solution (mass percentage content of sulfuric acid: 30%, molar amount: 0.6 mol), and 2 mol of aluminum hydroxide were mixed. The mixture was heated to 90°C and stirred for reaction for 8 h, and the pH value was adjusted using a sodium hydroxide solution (mass percentage content: 10%) to obtain a diethylphosphinate slurry.
(3) At 50°C, an aqueous flocculant solution prepared from anionic polyacrylamide with a mass of m₅ and 50 g of water was added to the diethylphosphinate slurry obtained in step (2). The mixture was stirred until aluminum diethylphosphinate flocs were formed, followed by filtration. The filter cake was washed 5 times with water of 3 times its mass, and dried at 110°C to constant weight to obtain the organic phosphonate flame retardant.

Specific process parameters of the preparation method and relevant data of the prepared organic phosphonate flame retardant are as shown in Table 2; "--" indicates that the material is not added.

**Table 2**

| | | Prepara tion Exampl e 6 | Prepara tion Exampl e 7 | Prepara tion Exampl e 8 | Compa rative Prepara tion Exampl e 7 | Compa rative Prepara tion Exampl e 8 | Compa rative Prepara tion Exampl e 9 | Compa rative Prepara tion Exampl e 10 |
|---|---|---|---|---|---|---|---|---|
| Step (1) | Antioxidant | 1076 | 1076 | 1076 | -- | 1076 | 1076 | 1076 |
| | m₄ (g) | 50 | 50 | 50 | -- | 50 | 50 | 50 |
| Step (2) | pH value | 3.8 | 4.0 | 4.2 | 3.8 | 3.8 | 3.6 | 4.3 |
| Step (3) | m₅ (g) | 0.5 | 0.5 | 0.5 | 0.5 | -- | 0.5 | 0.5 |
| Organic phosphonate flame retardant No. | | S6 | S7 | S8 | D7 | D8 | D9 | D10 |
| Aluminum diethylphosphinate (parts) | | 96.89 | 96.7 | 96.66 | 96.64 | 96.87 | 96.55 | 96.58 |
| Aluminum ethylbutylphosphinate (parts) | | 2.22 | 2.25 | 2.46 | 2.11 | 2.21 | 2.5 | 2.4 |
| Aluminum ethylphosphonate (parts) | | 0.28 | 0.35 | 0.35 | 0.57 | 0.29 | 0.27 | 0.3 |
| Aluminum monoethylphosphinate (parts) | | 0.05 | 0.06 | 0.03 | 0.05 | 0.06 | 0.04 | 0.05 |
| Alkali-insoluble substance (parts) | | 0.27 | 0.32 | 0.17 | 0.06 | 0.2 | 0.24 | 0.28 |
| Other phosphorus-containing compounds (parts) | | 0.29 | 0.32 | 0.33 | 0.57 | 0.37 | 0.4 | 0.39 |
| Sulfate radical (ppm) | | 302 | 408 | 422 | 457 | 472 | 409 | 352 |
| Water-soluble acid value (mg KOH/g) | | 0.111 | 0.153 | 0.142 | 0.31 | 0.307 | 0.322 | 0.311 |
| Organic acid value (mg KOH/g) | | 0.022 | 0.04 | 0.035 | 0.067 | 0.066 | 0.062 | 0.057 |

The polyamide composite material according to the present invention is described in detail below by way of examples, but the polyamide composite material is not limited to these examples.

In the following examples, materials for which no preparation method is provided are all commercially available chemicals, and the specific information is as follows:

| Component | Source |
|---|---|
| Polyamide 66 (PA66) | PA66 M2000, Guangdong Xinhui Meida Nylon Co., Ltd. |
| Polyamide 6 (PA6) | PA6 EPR24, Shenma Industrial Co., Ltd. |
| Polyamide 10T (PA10T) | PA10T Vicnyl 6100, Zhuhai Wantong Special Engineering Plastics Co., Ltd. |
| Organic phosphonate flame retardants S1-S8 | Preparation Examples 1-8 |
| Organic phosphonate flame retardants D1-D10 | Comparative Preparation Examples 1-10 |
| Melamine polyphosphate (MPP) | BUDIT 3141, Budenheim GmbH, Germany |
| Glass fiber | ECS10-03-568H, China Jushi Co., Ltd. |
| Lubricant | TR044W, Struktol GmbH, Germany |
| Antioxidant 1098 | RIANOX 1098, Rianlon Corporation |
| Antioxidant 168 | RIANOX 168, Rianlon Corporation |

### Examples 1-12, Comparative Examples 1-10

A polyamide composite material was provided. Types and use amounts of each component are as shown in Table 3 and Table 4. The use amount unit of each component is "parts by mass."

A method for preparing the polyamide composite material included: the polyamide resin, glass fiber, organic phosphonate flame retardant, MPP, antioxidant, and lubricant were mixed according to the formulation amounts to obtain a premix; the premix was fed into a twin-screw extruder at a screw speed of 380 rpm. For the PA66 system, the temperatures of zones 1-12 were 90°C, 180°C, 260°C, 250°C, 230°C, 230°C, 220°C, 220°C, 220°C, 220°C, 260°C, and 260°C, respectively, while for the PA10T system, the temperatures of zones 1-12 were 120°C, 260°C, 310°C, 300°C, 260°C, 260°C, 260°C, 260°C, 260°C, 260°C, 290°C, and 310°C, respectively. After melt mixing and extrusion pelletizing, the polyamide composite material is obtained.

The polyamide composite material was subjected to the following performance tests:
(1) Water-boiling phosphorus content test: 50 g of polyamide composite material pellets were taken and added to 500 mL of hot water at 90°C, followed by water-boiling for 1 h. The mixture was cooled to room temperature and filtered. The phosphorus content of the filtrate was determined by the ammonium molybdate spectrophotometric method specified in GB/T 11893-1989.
(2) Injection molding mold deposit test method: using an injection molding machine, the polyamide composite material pellets were continuously injected for 150 cycles at injection temperatures of 290°C, 285°C, 280°C, and 260°C. The mold deposit sample finally collected from the mold was removed and weighed by adopting an analytical balance.

The test data are as shown in Table 3 and Table 4.

**Table 3**

| | | Exa mple 1 | Exa mple 2 | Exa mple 3 | Exa mple 4 | Exa mple 5 | Exa mple 6 | Exa mple 7 | Exa mple 8 | Exa mple 9 | Exa mple 10 | Exa mple 11 | Exa mple 12 |
|---|---|---|---|---|---|---|---|---|---|---|---|---|---|
| PA66 | | 44 | 44 | 44 | 44 | 44 | 44 | 44 | 44 | | 57 | 41 | 45 |
| PA6 | | 12 | 12 | 12 | 12 | 12 | 12 | 12 | 12 | | 12 | | 12 |
| PA10T | | | | | | | | | | 56 | | | |
| Org anic phos pho nate | Type | S1 | S2 | S3 | S4 | S5 | S6 | S7 | S8 | S1 | S1 | S1 | S1 |
| | Use amou nt | 14 | 14 | 14 | 14 | 14 | 14 | 14 | 14 | 14 | 15 | 10 | 18 |
| MPP | | 4 | 4 | 4 | 4 | 4 | 4 | 4 | 4 | 4 | 10 | 3 | |
| Glass fiber | | 25 | 25 | 25 | 25 | 25 | 25 | 25 | 25 | 25 | 5 | 45 | 25 |
| Lubricant | | 0.5 | 0.5 | 0.5 | 0.5 | 0.5 | 0.5 | 0.5 | 0.5 | 0.5 | 0.5 | 0.5 | |
| Antioxidant 1098 | | 0.3 | 0.3 | 0.3 | 0.3 | 0.3 | 0.3 | 0.3 | 0.3 | 0.3 | 0.3 | 0.3 | |
| Antioxidant 168 | | 0.2 | 0.2 | 0.2 | 0.2 | 0.2 | 0.2 | 0.2 | 0.2 | 0.2 | 0.2 | 0.2 | |

| Performance data | | | | | | | | | | | | | |
|---|---|---|---|---|---|---|---|---|---|---|---|---|---|
| Mold deposit (mg) | 5.1 | 4.8 | 5.2 | 6.8 | 7.1 | 4.0 | 4.5 | 4.4 | 6.7 | 7.2 | 4.1 | 4.7 | |
| Water-boiling phosphorus content (ppm) | 406 | 420 | 358 | 453 | 394 | 481 | 432 | 468 | 376 | 507 | 366 | 410 | |

**Table 4**

| | | Com parat ive Exa mple 1 | Com parat ive Exa mple 2 | Com parat ive Exa mple 3 | Com parat ive Exa mple 4 | Com parat ive Exa mple 5 | Com parat ive Exa mple 6 | Com parat ive Exa mple 7 | Com parat ive Exa mple 8 | Com parat ive Exa mple 9 | Com parat ive Exa mple 10 |
|---|---|---|---|---|---|---|---|---|---|---|---|
| PA66 | | 44 | 44 | 44 | 44 | 44 | 44 | 44 | 44 | 44 | 44 |
| PA6 | | 12 | 12 | 12 | 12 | 12 | 12 | 12 | 12 | 12 | 12 |
| Organi c phosph onate | Type | D1 | D2 | D3 | D4 | D5 | D6 | D7 | D8 | D9 | D10 |
| | Use amou nt | 14 | 14 | 14 | 14 | 14 | 14 | 14 | 14 | 14 | 14 |
| MPP | | 4 | 4 | 4 | 4 | 4 | 4 | 4 | 4 | 4 | 4 |
| Glass fiber | | 25 | 25 | 25 | 25 | 25 | 25 | 25 | 25 | 25 | 25 |
| Lubricant | | 0.5 | 0.5 | 0.5 | 0.5 | 0.5 | 0.5 | 0.5 | 0.5 | 0.5 | 0.5 |
| Antioxidant 1098 | | 0.3 | 0.3 | 0.3 | 0.3 | 0.3 | 0.3 | 0.3 | 0.3 | 0.3 | 0.3 |
| Antioxidant 168 | | 0.2 | 0.2 | 0.2 | 0.2 | 0.2 | 0.2 | 0.2 | 0.2 | 0.2 | 0.2 |

| Performance data | | | | | | | | | | | |
|---|---|---|---|---|---|---|---|---|---|---|---|
| Mold deposit (mg) | | 10.0 | 9.4 | 8.5 | 8.6 | 8.0 | 8.8 | 11.7 | 9.8 | 9.1 | 9.4 |
| Water-boiling | | 576 | 562 | 525 | 533 | 517 | 568 | 589 | 513 | 555 | 531 |
| phosphorus content (ppm) | | | | | | | | | | | |

As can be seen from the data in Table 3, the polyamide composition provided by the present invention, which adopts an organic phosphonate flame retardant with a low acid value, can significantly reduce mold deposit generated during injection molding, such that the mold deposit is ≤ 7.2 mg. Meanwhile, the water-boiling phosphorus content of the polyamide composition is ≤ 507 ppm, which reduces the content of water-boiling precipitates, improves the heat and humidity resistance stability of the polyamide composition, and prolongs its service life under hot and humid conditions.

As can be seen from the test data in Table 4, the relatively high acid value of the organic phosphonate flame retardants in Comparative Examples 1-10 results in more injection molding mold deposits of the polyamide composition, an increase in the water-boiling phosphorus content, and poorer stability under hot and humid conditions.

The applicant declares that the polyamide composite material and the application thereof of the present invention are illustrated by the above examples, but the present invention is not limited to the above examples, that is, it does not mean that the present invention needs to rely on the above examples to be implemented. Those skilled in the art should understand that any improvements to the present invention, equivalent substitutions of various raw materials in products of the present invention, addition of auxiliary ingredients, and selections of specific methods all fall within the scope of protection and the scope of disclosure of the present invention.

## Claims

1. A polyamide composite material, comprising, in parts by mass, the following components:
| | |
|---|---|
| a polyamide resin | 35-82 parts |
| a reinforcing material | 5-45 parts |
| an organic phosphonate flame retardant | 5-25 parts, |
wherein a water-soluble acid value of the organic phosphonate flame retardant is 0.1-0.3 mg KOH/g.

2. The polyamide composite material according to claim 1, wherein the polyamide resin comprises any one or a combination of at least two of polyamide 6, polyamide 11, polyamide 12, polyamide 66, polyamide 46, polyamide 610, polyamide 611, polyamide 612, polyamide 1010, polyamide 6T, polyamide 9T, and polyamide 10T; and
preferably, the reinforcing material comprises any one or a combination of at least two of a glass fiber, a carbon fiber, an aramid fiber, an asbestos fiber, a wollastonite fiber, a ceramic fiber, a potassium titanate whisker, a basic magnesium sulfate whisker, a silicon carbide whisker, and an aluminum borate whisker.

3. The polyamide composite material according to claim 1, wherein the organic phosphonate flame retardant comprises, in parts by mass, the following components:
a diethylphosphinate 95-99.88 parts
an ethylbutylphosphinate 0.1-3 parts
an ethylphosphonate 0.01-1 part
a monoethylphosphinate 0.01-1 part.

4. The polyamide composite material according to claim 3, wherein cations in the diethylphosphinate, the ethylbutylphosphinate, the ethylphosphonate, and the monoethylphosphinate each independently comprise any one or a combination of at least two of Al³⁺, Ca²⁺, Cu²⁺, Zn²⁺, Fe²⁺, Fe³⁺, and Ti⁴⁺, preferably Al³⁺;
preferably, the organic phosphonate flame retardant further comprises an alkali-insoluble substance, and the alkali-insoluble substance comprises any one or a combination of at least two of a hydroxide, an oxide, a phosphate, a pyrophosphate, a polyphosphate, and a phosphite;
preferably, the alkali-insoluble substance in the organic phosphonate flame retardant, in parts by mass, is ≤ 3 parts; and
preferably, the organic phosphonate flame retardant further comprises other phosphorus-containing compounds, and the other phosphorus-containing compounds in the organic phosphonate flame retardant, in parts by mass, are ≤ 1 part.

5. The polyamide composite material according to claim 1, wherein an organic acid value of the organic phosphonate flame retardant is ≤ 0.05 mg KOH/g, preferably 0.001-0.04 mg KOH/g; and
preferably, a mass content of a sulfate radical in the organic phosphonate flame retardant is 100-500 ppm, further preferably 110-430 ppm.

6. The polyamide composite material according to claim 1, wherein the polyamide composite material further comprises, in parts by mass, 1-15 parts of a melamine flame retardant;
preferably, the melamine flame retardant comprises any one or a combination of at least two of melamine polyphosphate, melamine pyrophosphate, piperazine pyrophosphate, melam polyphosphate, melam pyrophosphate, melam phosphate, melam diethylphosphinate, melam ethylphosphinate, melam phosphite, and melam alkylphosphonate;
preferably, a mass ratio of the organic phosphonate flame retardant to the melamine flame retardant is 1: (0.1-3);
preferably, the polyamide composite material further comprises any one or a combination of at least two of a synergistic flame retardant, an antioxidant, and a lubricant;
preferably, the synergistic flame retardant comprises any one or a combination of at least two of zinc borate, zinc stannate, zinc sulfide, and boehmite;
preferably, the synergistic flame retardant in the polyamide composite material, in parts by mass, is ≤ 5 parts;
preferably, the polyamide composite material further comprises, in parts by mass, 0.01-1 part of an antioxidant; and
preferably, the polyamide composite material further comprises, in parts by mass, 0.01-1 part of a lubricant.

7. The polyamide composite material according to claim 1, wherein a water-boiling phosphorus content of the polyamide composite material is ≤ 510 ppm, preferably 370-507 ppm; and
preferably, an injection molding mold deposit of the polyamide composite material is ≤ 7.5 mg, further preferably 4-7.2 mg.

8. A method for preparing the polyamide composite material according to any one of claims 1-7, comprising: melt-blending the polyamide resin, the reinforcing material, and the organic phosphonate flame retardant, followed by extrusion, to obtain the polyamide composite material.

9. The preparation method according to claim 8, comprising the following steps:
mixing the polyamide resin and the organic phosphonate flame retardant to obtain a premix; and
melt-blending the premix and the reinforcing material, followed by extrusion, to obtain the polyamide composite material, wherein
preferably, a mixed material further comprises any one or a combination of at least two of a melamine flame retardant, a synergistic flame retardant, an antioxidant, and a lubricant;
preferably, the melt-blending is performed in a screw extruder;
preferably, a temperature of the screw extruder is 180-330°C; and
preferably, the extrusion is further followed by steps of pelletizing and drying.

10. An application of the polyamide composite material according to any one of claims 1-7 in an electronic and electrical appliance, an electrical product component, an energy storage device, a connector, or an automotive part.
